# EUROPÄISCHE PATENTSCHRIFT

(11) **EP 1 712 828 B1**
(45) Veröffentlichungstag und Bekanntmachung des Hinweises auf die Patenterteilung: **05.03.2008**
(21) Anmeldenummer: 06007591.8
(22) Anmeldetag: 11.04.2006
(51) Int. Cl.: F16M 13/04

(54) **Körperstativ**
Body-mounted support
Support à soutien corporel

(30) Priorität: 15.04.2005 DE 102005017487
(43) Veröffentlichungstag der Anmeldung: 18.10.2006
(73) Patentinhaber: Camera Dynamics GmbH, 85386 Eching (DE)
(72) Erfinder: Hein, Dieter, 86949 Windach-Hechenwang (DE); Schaller, Curt, 81541 München (DE); Seipel, Roland, 86565 Gachenbach/Sattelberg (DE)
(74) Vertreter: HOFFMANN EITLE

(56) Entgegenhaltungen:
- EP-A- 1 586 925
- WO-A-95/25927
- DE-A1- 3 416 823
- DE-U1- 8 316 534
- GB-A- 2 230 946
- US-A- 4 017 168
- US-A- 4 208 028
- US-A- 4 394 075
- US-A- 4 523 732
- US-A- 6 030 130

## Beschreibung

### Technisches Gebiet

Die vorliegende Erfindung betrifft ein Körperstativ mit einem Federarm gemäß dem Oberbegriff des Patentanspruchs 1

### Stand der Technik

Ein solcher Federarm ist aus der WO-A-95/25927 bekannt.

Kamera-Körperstative mit einem Federarm sind an sich seit Mitte der 70er Jahre bekannt und beispielsweise in den US-Patenten 4,017,168, 4,156,512, 4,208,028 und 4,394,075 sowie 6,030,130 beschrieben. Der Federarm des Körperstativs wird an seinem einen Ende über einen Tragegurt am Körper des Kameramanns befestigt, und am anderen Ende des Federarms wird die Kamera befestigt, entweder einfach über eine Kameraplatte oder auch über ein Pendelsystem (Gimbal). Mittels des Körperstativs wird das Gewicht der Kamera am Körper des Kameramanns abgestützt. Dadurch wird die Kameraführung wesentlich erleichtert verglichen mit einer Situation, in der der Kameramann die Kamera mit ihrem gesamten Gewicht in seinen Händen halten muss.

Die Bewegung der Kamera ist dabei im Wesentlichen von der Bewegung des Kameramanns entkoppelt. Der Kameramann kann daher im Gehen oder sogar Laufen Filmaufnahmen machen, ohne dass sich seine Geh- oder Laufbewegungen auf die Kamera übertragen und das Bild verwackeln. Die Kamera schwebt vielmehr im Raum und kann über den Federarm leicht aufwärts und abwärts bewegt sowie um einen am Körperstativ vorgesehenen Schwenkachse herum nach links und rechts verschwenkt werden

Der Federarm eines solchen Körperstativs weist meist zumindest eine Parallelogrammführung auf. Die Kamera wird dann unabhängig von der Stellung des Federarms stets in horizontaler Orientierung am Körper des Kameramanns gehalten. Häufig sind in einem Federarm auch zwei Parallelogrammführungen miteinander gelenkig verbunden, um den Bewegungsspielraum zur Führung der Kamera noch zu vergrößern.

Im Federarm ist außerdem zumindest ein Energiespeicher vorhanden, insbesondere in Form von Druck- oder Zugfedern, und so ausgebildet, dass er das von der Kamera aufgebrachte Gewicht möglichst vollständig kompensiert. Die bekannten Systeme arbeiten oft mit Zugseilen, Umlenkrollen und Zugfedern, um den Gewichtsausgleich in den verschiedenen Positionen des Federarms zu gewährleisten. Auch werden Zugfedern ohne Seilzug zwischen den Parallelogrammstangen eingesetzt. Dabei kann es sein, dass die Verkürzung und Verlängerung der Anlenkpunkte des Federelementes auf Zug oder auf Druck wirksam sind, wobei sowohl Zugfedern als auch Druckfedern zum Einsatz kommen können. Zur Anwendung kommen auch klassische Federn alleine oder in Verbindung mit Gasdruckfedern.

Ein solches Körperstativ sollte für verschiedene Kameras - beispielsweise recht leichtgewichtige Videokameras oder auch deutlich schwerere Filmkameras - verwendet werden können. Auch das Anbringen weiterer Gewichte in Form von Batterien, Monitoren etc. sollte möglich sein, ohne die Leistungsfähigkeit des Stativs zu beeinträchtigen. Daher sollte das Körperstativ an verschiedene zu haltende Gewichte anpassbar sein.

Um dieses Problem zu lösen, schlägt beispielsweise DE 34 16 823 A1 vor, die Gegenkraft an das Gewicht der gehaltenen Geräte durch Einsetzen mehrerer Druckfedern bzw. durch Entnahme von Druckfedern anzupassen.

Der Energiespeicher wird unabhängig davon aber auch bei einer Bewegung der Parallelogrammführung seine Federkraft verändern. In verschiedenen Stellungen der Parallelogrammführung übt der Energiespeicher daher eine unterschiedliche Kraft aus, die möglicherweise die Kraft, die von der Kamera selbst ausgeübt wird, übersteigt oder untersteigt. Diese Differenzkraft muss vom Kameramann abgefangen werden, was natürlich zu einer Beeinträchtigung der Kameraführung führt: oft wird die optimale Leistung des Federarms nur in der waagrechten Position erbracht, während der Federarm in seiner weit nach oben ausgelenkten Stellung nur eine unzureichende Kraft aufbringt. Ein extremer Anstieg der Progression im unteren Bewegungsbereich des Federarms ist ebenfalls problematisch.

In dem deutschen Gebrauchsmuster 83 16 534 ist ein Federarm für ein Stativ beschrieben, der ebenfalls eine solche Parallelogrammführung aufweist. Zur Gewichtsentlastung ist eine Gasdruckfeder vorgesehenen. Einer der beiden Anlenkpunkte dieser Gasdruckfeder kann zur Feineinstellung der von der Gasdruckfeder aufgebrachten Gegenkraft so verstellt werden, dass sich der Winkel zwischen der Längsachse dieser Gasdruckfeder und der Parallelogrammführung verändert. Diese Verstellung kann stufenlos oder in Stufen erfolgen.

### Darstellung der Erfindung

Der Erfindung liegt die Aufgabe zugrunde, ein Körperstativ mit einem Federarm zu schaffen, der das Gewicht eines zu haltenden und zu führenden Geräts in jeder Position exakt kompensiert.

Diese Aufgabe wird gelöst mit einem Körperstativ gemäß dem Patentanspruch 1.

Demzufolge ist bei einem Federarm mit einer Parallelogrammführung, die aus zwei einander gegenüberliegenden, parallel zueinander angeordneten Schenkeln und zwei einander ebenfalls gegenüberliegenden Verbindungselementen gebildet ist, die die jeweiligen Enden der Schenkel miteinander verbinden, und zumindest einem Energiespeicher, der an zwei Anlenkpunkten an der Parallelogrammführung gelagert ist, um eine auf die Parallelogrammführung einwirkende Belastung zu kompensieren, zumindest einer dieser Anlenkpunkte bezüglich der Parallelogrammführung so verstellbar, dass sich sowohl die Vorspannung als auch die Kraftwirkungsrichtung des Energiespeichers verändert.

Gemäß der Erfindung wird daher die oben erwähnte Veränderung der Kraftwirkungsrichtung des Energiespeichers zur Beeinflussung der Wirkungsweise des Energiespeichers aufrecht erhalten. Allerdings sieht die Erfindung vor, dass der besagte Anlenkpunkt des Energiespeichers bezüglich der Parallelogrammführung so verstellbar, dass sich zusätzlich auch die Kraftwirkungsrichtung des Energiespeichers verändert.

Der Kameramann kann den verstellbaren Anlenkpunkt des Energiespeichers somit in jeder beliebigen Stellung der Parallelogrammführung derart verstellen, dass der Energiespeicher das Gewicht der zu führenden Kamera exakt kompensiert.

Der Federarm ist dabei so ausgelegt, dass er als reiner Energiespeicher wirkt, also in jeder Stellung der Parallelogrammführung gleichmäßig die benötigte Kraft zur Verfügung stellt und nicht in unterschiedlichen Positionen mit unterschiedlichen Kräften wirkt. Das mittels der Parallelogrammführung geführte Gerät lässt sich so über annährend seinen gesamten Bewegungsbereich mit gleich bleibender Kraft aufwärts und abwärts bewegen.

Durch die neuartige Verstellbarkeit des Anlenkpunkts des Energiespeichers kann auch eine nicht optimal gerechnete Kinematik eines Parallelogramms optimiert werden. So können Produktionsfehler und Toleranzen abgefangen werden.

Zur Veränderung der Vorspannung und der Krafwirkungsrichtung des Energiespeichers ist vorzugsweise ein Stellelement vorgesehen, das den verstellbaren Anlenkpunkt an der Parallelogrammführung lagert. Die Form dieses Stellelements ist dann geeignet so berechnet, dass durch eine Betätigung des Stellelements sowohl der Abstand zwischen den Anlenkpunkten der Feder (d. h. die Federvorspannung) als auch der Winkel zwischen einer Längsachse des Energiespeichers und der Parallelogrammführung (d. h. die Kraftwirkungsrichtung) verändert werden.

In dem Stellelement ist ferner zumindest ein Langloch vorgesehen, über das es an der Parallelogrammführung gekoppelt ist, wobei Größe und Gestalt dieses Langlochs das Ausmaß der möglichen Verschiebung des Stellelements bezüglich der Parallelogrammführung bestimmen.

Erfindungsgemäß ist darüber hinaus eine Einstellschraube, die so mit einer Spindelmutter in Eingriff steht, dass sich die Spindelmutter bei einer Drehung der Einstellschraube entlang der Einstellschraube bewegt, wobei die Spindelmutter derart mit dem Stellelement in Eingriff steht, dass zwischen Spindelmutter und Stellelement eine Bewegung rechtwinklig zur Einstellschraube möglich ist, versehen.

Vorteilhafte Weiterbildungen des erfindungsgemäßen Federarms finden sich in den abhängigen Ansprüchen.

Vorzugsweise ist der zumindest eine Anlenkpunkt so verstellbar, dass sich sowohl der Abstand zwischen den Anlenkpunkten des Energiespeichers als auch der Winkel zwischen einer Längsachse des Energiespeichers und der Richtung der auf die Parallelogrammführung einwirkenden Belastung verändern.

Das Stellelement kann den verstellbaren Anlenkpunkt beispielsweise mit einem der beiden Verbindungselemente koppeln, während ein fixer Anlenkpunkt des Energiespeichers an einem der Schenkel der Parallelogrammführung gelagert ist.

Das Stellelement kann zur Veränderung der Vorspannung und der Kraftwirkungsrichtung des Energiespeichers linear beweglich sein.

Ebenso ist es aber möglich, dass das Stellelement zur Veränderung der Vorspannung und der Kraftwirkungsrichtung des Energiespeichers entlang einer Kurve beweglich ist. Diese kann durch eine in einem zweiten Schenkel der Parallelogrammführung ausgebildete Kurve oder Kulissenführung vorgegeben sein, mit der ein Ausleger des Stellelements im Eingriff ist.

In jedem Fall ist das Stellelement vorzugsweise zwischen einer Maximalstellung und einer Minimalstellung beweglich, wobei eine Längsachse des Energiespeichers in der Maximalstellung des Stellelements einen kleineren Winkel mit der Richtung der auf die Parallelogrammführung einwirkenden Belastung bildet als in der Minimalstellung. Dann ist die der Belastung entgegen wirkende Komponente der Ausgleichskraft des Energiespeichers in der Maximalstellung größer als in der Minimalstellung.

Der Energiespeicher kann zumindest eine Druckfeder aufweisen, was den Vorteil hat, dass diese auf Grund ihrer Charakteristik ein geringeres Progressionsverhalten aufweist. Zugfeder-Anordnungen sind aber auch möglich.

### Beschreibung der Zeichnungen

- Fig. 1: zeigt eine Gesamtansicht einer ersten Ausführungsform eines erfindungsgemäßen Federarms.
- Fig. 2: zeigt eine Parallelogrammführung dieses erfindungsgemäßen Federarms in einer oberen Stellung, wobei ein Stellhebel in eine Maximalstellung gebracht ist.
- Fig. 3: zeigt diese Parallelogrammführung in der oberen Stellung, wobei der Stellhebel in eine Minimalstellung gebracht ist.
- Fig. 4: zeigt diese Parallelogrammführung in einer unteren Stellung, wobei der Stellhebel in die Maximalstellung gebracht ist.
- Fig. 5: zeigt diese Parallelogrammführung in der unteren Stellung, wobei der Stellhebel in die Minimalstellung gebracht ist.
- Fig. 6: zeigt eine Variante einer erfindungsgemäßen Parallelogrammführung mit zwei Druckfederanordnungen.
- Fig. 7: zeigt eine Variante einer erfindungsgemäßen Parallelogrammführung mit Zugfedern.
- Fig. 8: zeigt eine weitere Variante einer erfindungsgemäßen Parallelogrammführung mit Druckfeder und Steuerkurve.

### Ausführliche Beschreibung einer bevorzugten Ausführungsform der Erfindung

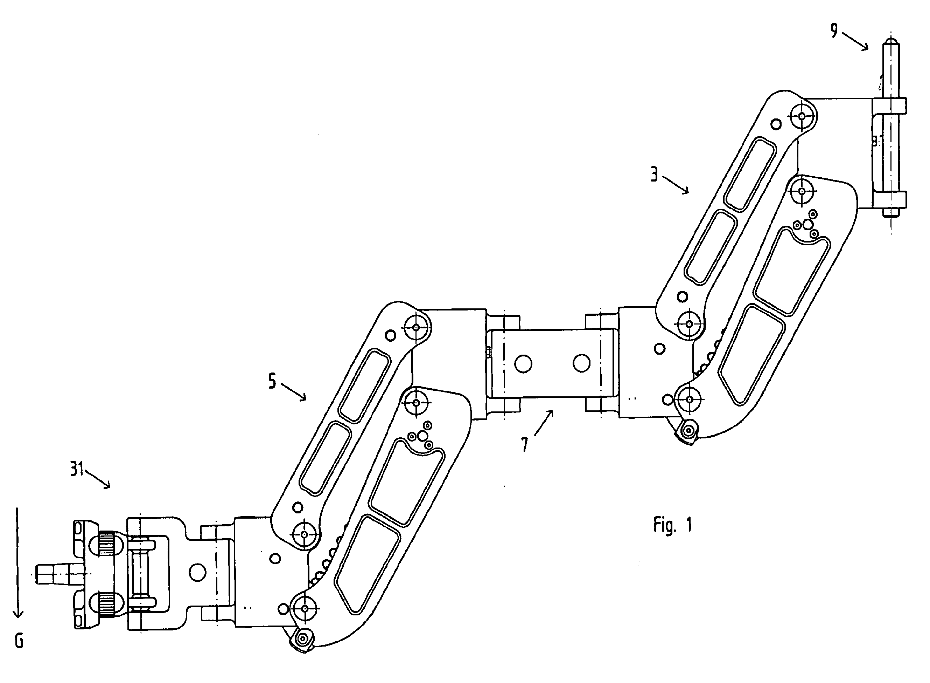

Eine erste bevorzugte Ausführungsform eines erfindungsgemäßen Federarms wird nun mit Bezug auf die Figuren 1 bis 5 der Zeichnungen beschrieben.

Fig. 1 zeigt eine Gesamtansicht eines erfindungsgemäßen Federarms 1. Dieser besteht hauptsächlich aus zwei Parallelogrammführungen 3 und 5, die über ein Kopplungselement 7 miteinander verbunden sind und später noch genauer diskutiert werden. An seinem ersten Ende verfügt der Federarm 1 über einen Stift 9, über den er schwenkbar an einem Gürtel oder Tragegurt des Kameramanns angebracht werden kann. Eine Halterung 31 am anderen Ende des Federarms dient zur Anbringung der zu führenden Kamera.

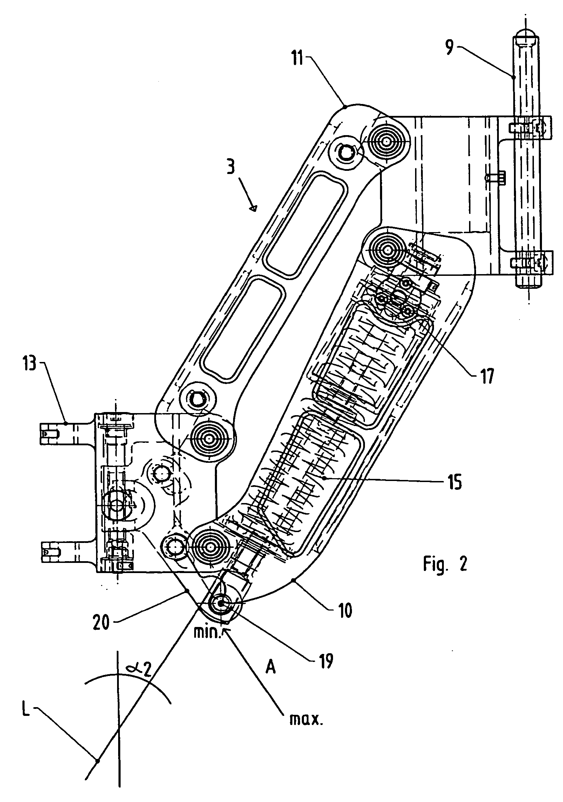

Die beiden Parallelogrammführungen 3 und 5 sind grundsätzlich identisch ausgestaltet. In den Figuren 2 bis 5 ist daher nur die Parallelogrammführung 3 dargestellt; alle Ausführungen dazu gelten aber entsprechend auch für die Parallelogrammführung 5.

Die Parallelogrammführung 3 wird durch zwei parallel zueinander angeordnete, einander gegenüberliegende Schenkel 10, 11 und zwei Verbindungselemente 12, 13 gebildet, die einander ebenfalls gegenüberliegen. Am Verbindungselement 12 sind erste Enden der Schenkel 10, 11 drehbar befestigt, und am Verbindungselemente 13 sind zweite Enden der Schenkel 10, 11 drehbar befestigt, so dass die Schenkel 10, 11 und Verbindungselemente 12, 13 ein in sich verstellbares Parallelogramm bilden. Die Verbindungselemente 12, 13 bleiben dabei stets vertikal orientiert, so dass eine am Ende des Federarms angebrachte Kamera unabhängig von der Auslenkung des Parallelogramms stets in einer horizontalen Lage gehalten wird.

Das Gewicht einer am Federarm 1 angebrachten Kamera (die Richtung der Gewichtskraft ist in Figur 1 durch den Pfeil "G" gekennzeichnet) wird in dieser Ausführungsform über eine Druckfeder-Anordnung 15 kompensiert. Diese befindet sich in einer Hülse, welche die Druckfeder-Anordnung 15 stützt und führt. In dieser Hülse befindet sich auch ein Vorspannmechanismus.

Auslenkung und Winkellage der Druckfeder-Anordnung 15 ändern sich während einer Auf- und Abwärtsbewegung der Kamera dynamisch. So werden die sich während der Auf- und Abwärtsbewegung der Kamera ändernden Kräfteverhältnisse kompensiert.

Die Druckfeder-Anordnung 15 ist in zwei Punkten an der Parallelogrammführung 3 angelenkt: in einem ersten Anlenkpunkt 17 ist die Druckfederanordnung 15 am Schenkel 10 der Parallelogrammführung gelagert. Dieser Anlenkpunkt 17 ist hier bezüglich des Schenkels 10 nicht verstellbar (was aber der Fall sein könnte); die Druckfederanordnung 15 ist lediglich um diesen Anlenkpunkt 17 herum drehbar angeordnet. Der zweite Anlenkpunkt 19 ist dagegen erfindungsgemäß beweglich an der Parallelogrammführung gelagert.

Dazu ist in der hier beschriebenen Ausführungsform ein Stellelement in Form eines Stellhebels 20 vorgesehen, der den beweglichen Anlenkpunkt 19 mit dem Verbindungselement 13 koppelt.

Der Stellhebel 20 weist hier, als Beispiel, zwei Langlöcher 22, 24 auf, durch die sich zwei Achsen 23, 25 erstrecken, so dass der Stellhebel 20 verschieblich am Verbindungselement 13 gelagert ist. Das Ausmaß der Verschiebung des Stellhebels 20 bezüglich des Verbindungselements 13 ist durch die Gestalt und Größe der beiden Langlöcher 22, 24 begrenzt.

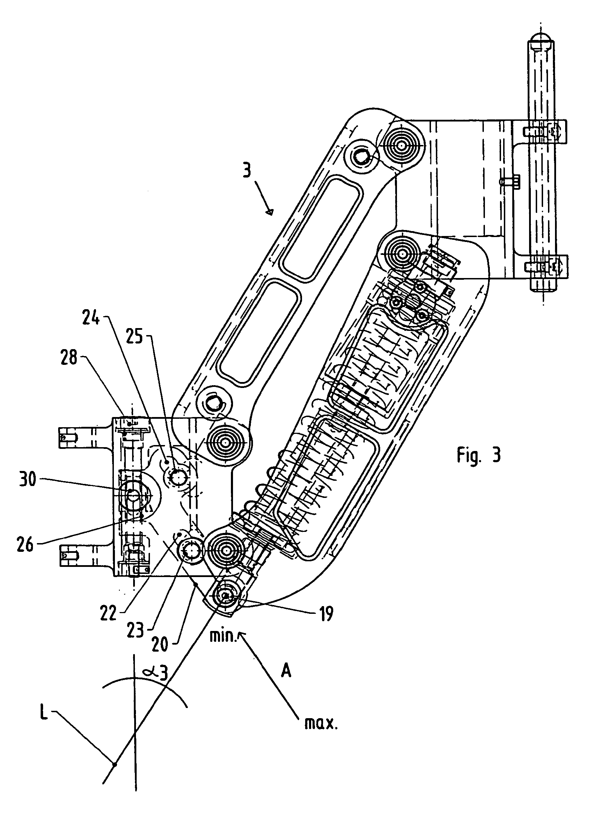

Die Betätigung des Stellhebels 20 durch den Bediener erfolgt über eine Einstellschraube 28 (vgl. Figur 3), die so im Eingriff mit einer Spindelmutter 30 ist, dass sich die Spindelmutter 30 bei einer Drehung der Einstellschraube 28 auf- bzw. abwärts bewegt. Die Spindelmutter 28 ist ihrerseits in Eingriff mit einer U-förmigen Mitnahmegabel 26 des Stellhebels 20, und zwar so, dass eine horizontale Bewegung (d.h. eine Bewegung rechtwinklig zur Einstellschraube 28) zwischen Spindelmutter 28 und Mitnahmegabel 26 möglich ist.

Die Arbeitsweise des Stellhebels 20 ergibt sich am besten aus einem Vergleich der Figuren 2 und 3. In beiden Figuren ist die Parallelogrammführung 3 in derselben Position, nämlich einer nach oben ausgelenkten Position, dargestellt. Der Stellhebel 20 befindet sich aber in Figur 2 in einer am weitesten nach links oben in der Zeichnung verschobenen Position (Maximalstellung), in Figur 3 dagegen in einer am weitesten nach rechts unten in der Zeichnung verschobenen Position (Minimalstellung).

Der Vergleich der Figuren 2 und 3 ergibt zunächst, dass der Anlenkpunkt 19 der Druckfederanordnung 15 mittels des Stellhebels 20 bezüglich der Parallelogrammführung 3 verschiebbar ist - bei unveränderter Stellung der Parallelogrammführung 3 bewirkt eine Verschiebung des Stellhebels 20, geführt durch seine Langlöcher 22 und 24 und die zugehörigen Achsen 23 und 25, eine Verschiebung des verstellbaren oder variablen Anlenkpunkts 19 in Richtung des in Figur 2 und 3 dargestellten Pfeils A (= Erstreckungsrichtung der Langlöcher 22 und 24). Diese Verschiebung des Anlenkpunkts 19 entlang des Pfeils A bewirkt zweierlei: erstens verändert sich der Abstand zwischen dem fixen Anlenkpunkt 17 und dem variablen Anlenkpunkt 19; dieser Abstand ist in der Maximalstellung (Figur 2) größer als in der Minimalstellung (Figur 3), wodurch sich die Vorspannung der Druckfederanordnung 15 entsprechend verändert.

Gleichzeitig verändert sich aber auch die Krafteinwirkungsrichtung der Druckfederanordnung 15: Die Längsachse der Druckfederanordnung 15, in den Figuren 2 und 3 mit "L" gekennzeichnet, bildet in der Maximalstellung des Stellhebels 20 (Figur 2) einen Winkel α2 mit der Vertikalen, der kleiner ist als der entsprechende Winkel α3 in der Minimalstellung (Figur 3). Die Vertikale entspricht der Richtung, in der das Gewicht_einer Kamera auf die Parallelogrammführung 3 einwirkt (vgl. Figur 1). In der Maximalstellung (Figur 2) ist die Komponente der Federkraft, die der nach unten gerichteten Gewichtskraft der Kamera entgegenwirkt, somit größer als in der Minimalstellung (Figur 3).

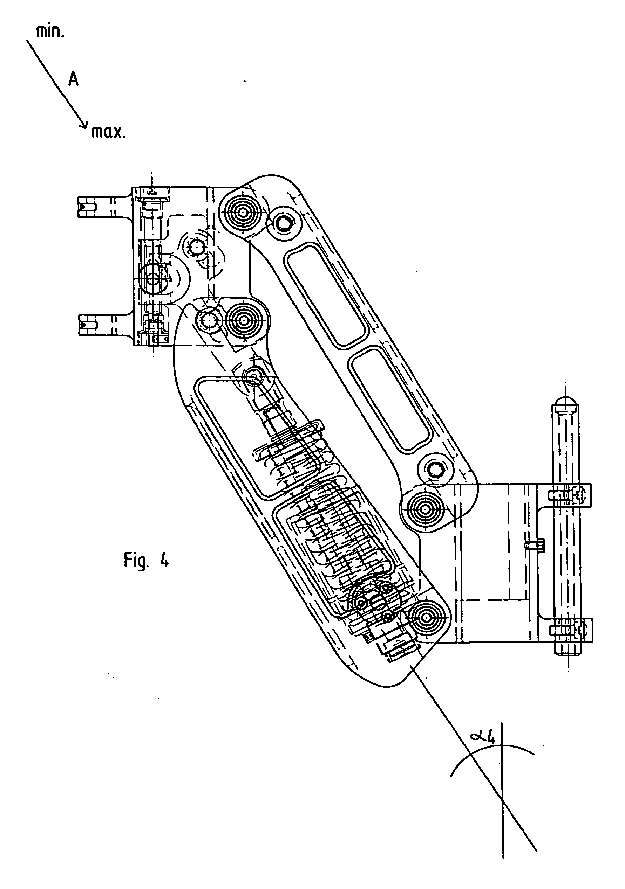

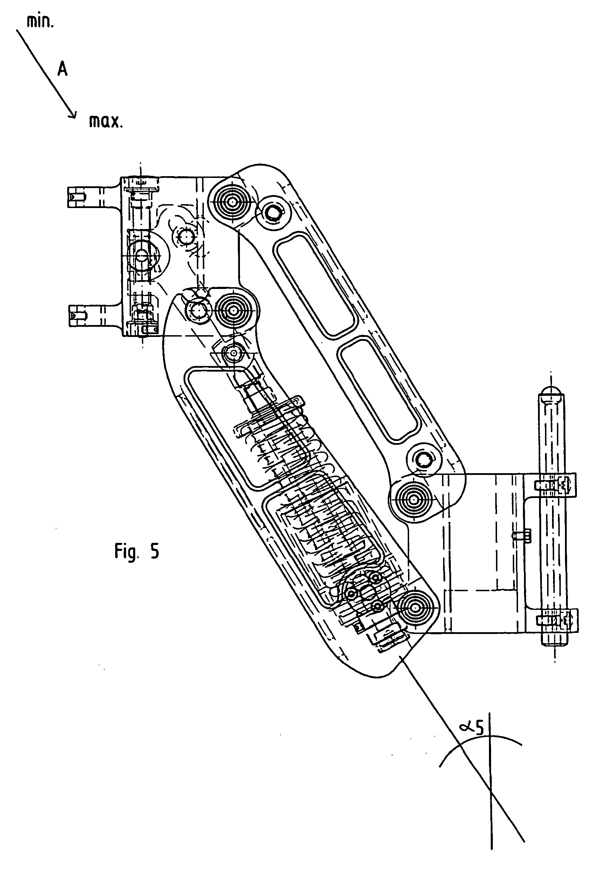

Die Figuren 4 und 5 veranschaulichen eine entsprechende Betätigung des Stellhebels 20 aus einer Maximalstellung (Figur 4) in eine Minimalstellung (Figur 5) in einer nach unten ausgelenkten Stellung der Parallelogrammführung 3. Die Stellung der Parallelogrammführung 3 ist in Figur 4 und 5 wiederum dieselbe, es verändert sich lediglich die Lage des variablen Anlenkpunkts 19 der Druckfederanordnung 15 durch Verschieben des Stellhebels 20 in Richtung des Pfeils A, die durch die Langlöcher 22, 24 und Achsen 23, 25 bestimmt ist.

Die Längsachse L der Druckfederanordnung 15 bildet bezüglich der Vertikalen, d.h. bezüglich der Richtung der Gewichtskraft einer Kamera, auch hier in der Maximalstellung (Figur 4) einen kleineren Winkel α₄ als in der Minimalstellung (α₅, Figur 5), d.h. die der Gewichtskraft entgegen wirkende Komponente der Federkraft ist in der Maximalstellung größer als in der Minimalstellung. Gleichzeitig ist der Abstand zwischen dem fixen 17 und dem variablen Anlenkpunkt 19 der Druckfederanordnung 15 in der Maximalstellung (Figur 4) kleiner als in der Minimalstellung (Figur 5), mit der entsprechenden Auswirkung auf die Vorspannung der Druckfederanordnung 15.

Zusammenfassend lässt sich feststellen, dass sich sowohl der Abstand zwischen den beiden Anlenkpunkten 17 und 19 als auch der Winkel zwischen der Längsachse L der Druckfederanordnung 15 bezüglich der Parallelogrammführung 3 durch Betätigen des Stellhebels 20 verändern. Eine Betätigung des Stellhebels 20 bewirkt also sowohl eine Veränderung der Vorspannung als auch eine Veränderung der Kraftwirkungsrichtung der Druckfederanordnung 15.

In jeder beliebigen Stellung der Parallelogrammführung 3 kann die Wirkungsweise der Druckfederanordnung 15 über eine geeignete Verschiebung des Stellhebel 20 somit derart angepasst werden, dass die Druckfederanordnung 15 das Gewicht der zu führenden Kamera exakt kompensiert.

Ausgehend von der eben beschriebenen Ausführungsform sind die folgenden Varianten denkbar:

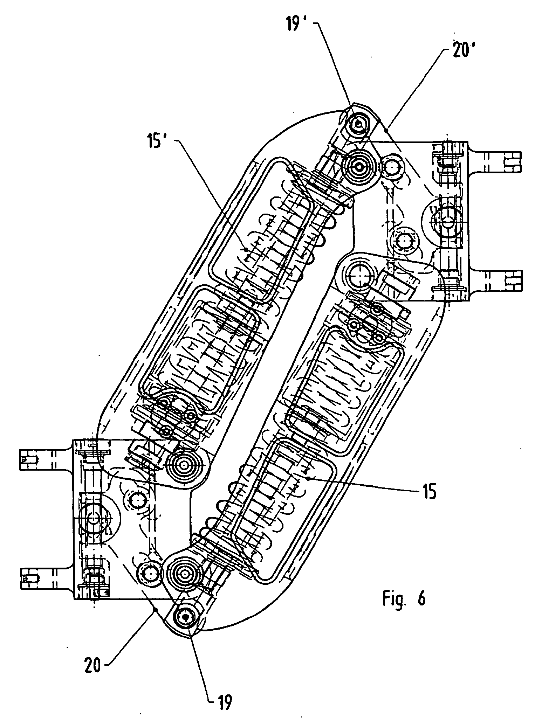

Zunächst ist es möglich, zwei Druckfederanordnungen in einem Parallelogramm zu kombinieren. Eine Parallelogrammführung gemäß dieser Variante ist in Figur 6 dargestellt.

Die beiden Druckfederanordnungen 15, 15' liegen sich dann spiegelverkehrt im Parallelogramm gegenüber und wirken zusammen. Für einen beweglichen Anlenkpunkt 19, 19' jeder Druckfederanordnung 15, 15' ist ein eigenes Stellelement 20, 20' vorgesehen. Diese Kombination verdoppelt die Tragleistung des Federarms.

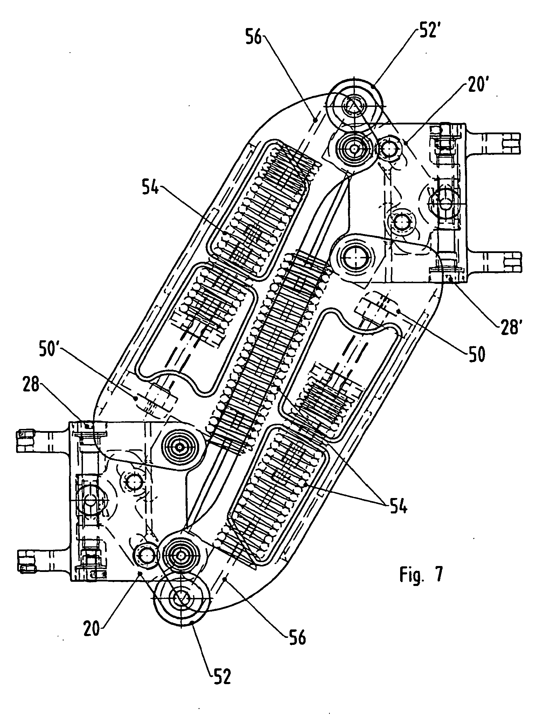

Außerdem ist auch eine Ausführungsform mit einem Zugfederstrang aus einer bis drei Zugfedern denkbar. Eine Parallelogrammführung gemäß dieser Variante ist in Figur 7 dargestellt; hier sind drei Zugfedern 54 vorgesehen. Umlenkrollen 52, 52' eines in "Z-Form" ausgelegten Parallelogramms sind in den Stellelementen 20, 20' untergebracht. Die Zugfedern 54 bzw. vielmehr die sie verbindenden Seile 56 umlaufen diese kurvenförmig veränderbaren Umlenkrollen 52, 52'. Die Vorspannung des Federstrangs erfolgt sowohl über Spannschrauben 50, 50' am Gehäuse der Parallelogrammführung als auch über die Stellelemente 20, 20'.

Als weitere Variante ist vorgesehen, dass der variable Anlenkpunkt nicht linear verschieblich ist (wie in der oben mit Bezug auf die Fig. 1 bis 5 beschriebenen Ausführungsform in Richtung des Pfeils A), sondern sich bei einer Betätigung des Stellelements auf einer Kurve bewegt. Dazu könnten grundsätzlich beispielsweise Öffnungen entsprechend den oben erwähnten Langlöchern 22 und 24 vorhanden sein, die das Stellelement 20 führen, die aber gekrümmt ausgebildet sind.

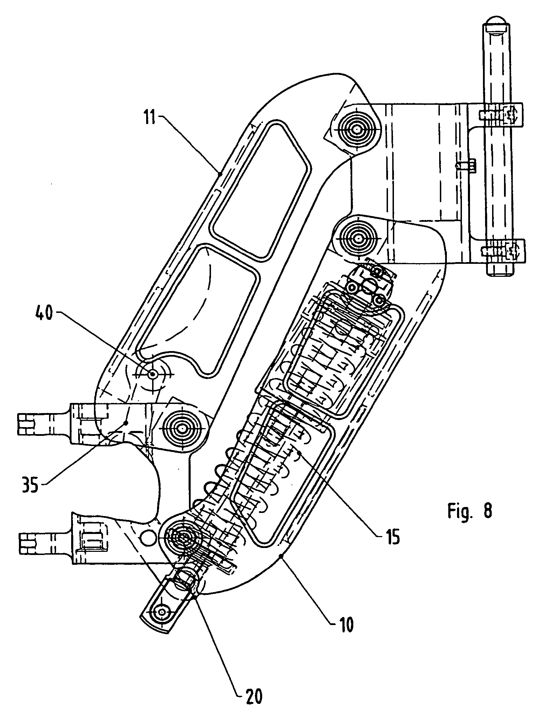

Gemäß einer Weiterbildung der Erfindung ist der Stellhebel 20 so an der Parallelogrammführung 3, 5 angeordnet, dass sich seine Lage während der Auf- und Abwärtsbewegung der Kamera dynamisch verändert. Eine solche Parallelogrammführung zeigt die Figur 8. Sie unterschiedet sich von der oben mit Bezug auf die Figuren 1 bis 5 diskutierten darin, dass hier durch den zweiten Schenkel 11 des Parallelogramms auf den Stellhebel 20 eingewirkt wird und somit während der Bewegung eine kontinuierliche, gezielte Beeinflussung der Winkellage und der Federkraft der Druckfederanordnung 15 vorgenommen wird, um das Gewicht einer Kamera in jeder Stellung der Parallelogrammführung exakt zu kompensieren und die Kamera in jeder Stellung "schweben" zu lassen.

Dazu befindet sich im zweiten Schenkel 11 des Parallelogramms ein als Kurve geformtes Element (Steuer- oder Anlenkkurve) 35. Der Stellhebel 20 (hier nur teilweise dargestellt) ist über einen Ausleger 40 mit dieser Kurve verbunden und fährt über die Kurve 35 hin und her, während die Parallelogrammführung 3 auf und ab bewegt wird. Dadurch wird die Position des Stellelements 20 aktiv und permanent an die Position der Parallelogrammführung angepasst.

So kann man die Federleistung und die Progression der Druckfederanordnung 15 in jeder Stellung des Parallelogramms optimal an die benötigte Traglast anpassen. Das für die jeweilige Anwendung benötigte Verhalten des Parallelogramms kann nun durch geeignete Wahl der Anlenkkurve 35 sowie der Feder 15 hinsichtlich deren Leistung, Aufbau und Material bestimmt werden.

Die oben mit Bezug auf die Ausführungsform der Figuren 1 bis 5 beschriebene manuelle Verstellbarkeit des Stellhebels 20 kann zusätzlich zu der dynamischen Beeinflussung der Lage des Stellhebels 20 über die Steuerkurve 35 möglich sein.

## Patentansprüche

1. Körperstativ mit einem Federarm (1) auf dem ein Gerät anbringbar ist, umfassend
eine Parallelogrammführung (3, 5), die aus zwei einander gegenüberliegenden, parallel zueinander angeordneten Schenkeln (10, 11) und zwei einander ebenfalls gegenüberliegenden Verbindungselementen (12, 13) gebildet ist, die die jeweiligen Enden der Schenkel (10, 11) miteinander verbinden,
und einem Energiespeicher (15), der an zwei Anlenkpunkten (17, 19) an der Parallelogrammführung (3, 5) gelagert ist, um eine auf die Parallelogrammführung (3, 5) einwirkende Belastung zu kompensieren, so dass sich das Gerät über annährend seinen gesamten Bewegungsbereich mit gleichbleibender Kraft aufwärts und abwärts bewegen lässt, wobei
zumindest einer (19) dieser Anlenkpunkte (17, 19) bezüglich der Parallelogrammführung (3, 5) so verstellbar ist, dass sich sowohl die Vorspannung als auch die Kraftwirkungsrichtung des Energiespeichers (15) verändert, **gekennzeichnet durch**
ein Stellelement (20), das den verstellbaren Anlenkpunkt (19) an der Parallelogrammführung (3, 5) lagert; wobei das Stellelement (20) zumindest ein Langloch (22, 24) aufweist, über das es mit der Parallelogrammführung (3, 5) gekoppelt ist und Größe und Gestalt dieses Langlochs (22, 24) das Ausmaß der möglichen Verschiebung des Stellelements (20) bezüglich der Parallelogrammführung (3, 5) bestimmen, und
eine Einstellschraube (28), die so mit einer Spindelmutter (30) in Eingriff steht, dass sich die Spindelmutter bei einer Drehung der Einstellschraube entlang der Einstellschraube bewegt, wobei die Spindelmutter (30) derart mit dem Stellelement (20) in Eingriff steht, dass zwischen Spindelmutter (30) und Stellelement (20) eine Bewegung rechtwinklig zur Einstellschraube möglich ist.

2. Körperstativ nach Anspruch 1, bei welchem der zumindest eine Anlenkpunkt (19) so verstellbar ist, dass sich sowohl der Abstand zwischen den Anlenkpunkten (17, 19) des Energiespeichers (15) als auch der Winkel zwischen einer Längsachse (L) des Energiespeichers und der Richtung der auf die Parallelogrammführung (3, 5) einwirkenden Belastung verändern.

3. Körperstativ nach einem der vorstehenden Ansprüche, bei welchem das Stellelement (20) den verstellbaren Anlenkpunkt (19) mit einem der beiden Verbindungselemente (12, 13) koppelt, während ein fixer Anlenkpunkt (17) des Energiespeichers (15) an einem ersten Schenkel (10, 11) der Parallelogrammführung (3, 5) gelagert ist.

4. Körperstativ nach einem der vorstehenden Ansprüche, bei welchem das Stellelement (20) zur Veränderung der Vorspannung und der Kraftwirkungsrichtung des Energiespeichers (15) linear beweglich ist.

5. Körperstativ nach einem der Ansprüche 1 bis 3, bei welchem das Stellelement (20) zur Veränderung der Vorspannung und der Kraftwirkungsrichtung des Energiespeichers (15) entlang einer Kurve beweglich ist.

6. Körperstativ nach einem der vorangehenden Ansprüche, bei welchem das Stellelement (20) mit einer in einem zweiten Schenkel (11) der Parallelogrammführung (3, 5) ausgebildeten Steuerkurve (35) so im Eingriff ist, dass Winkellage und Federkraft des Energiespeichers (15) bei einer Auslenkung der Parallelogrammführung (3, 5) dynamisch beeinflusst werden.

7. Körperstativ nach einem der vorstehenden Ansprüche, bei welchem das Stellelement (20) zwischen einer Maximalstellung und einer Minimalstellung beweglich ist, wobei eine Längsachse des Energiespeichers (15) in der Maximalstellung des Stellelements (20) einen kleineren Winkel (α₂*, α*₄) mit der Richtung der auf die Parallelogrammführung einwirkenden Belastung bildet als in der Minimalstellung (α₃, α₅).

8. Körperstativ nach einem der vorangehenden Ansprüche, bei welchem der Energiespeicher (15) zumindest eine Druckfeder aufweist.

9. Körperstativ nach einem der vorangehenden Ansprüche, bei welchem der Energiespeicher zumindest eine Zugfeder aufweist.

10. Körperstativ nach einem der vorangehenden Ansprüche, bei welchem zwei Parallelogrammführungen (3, 5) vorhanden und über ein Kopplungselement (7) miteinander gekoppelt sind.

11. Körperstativ nach einem der vorangehenden Ansprüche, weiter mit einer Anbringung (9), über die er schwenkbar an einem Gürtel oder Tragegurt angebracht werden kann, und einer Halterung (31) zur Anbringung einer Kamera.

## Claims

1. Body support having a spring arm (1) on which a device is attachable comprising
a parallelogram guide (3, 5) formed from two legs (10, 11) arranged opposite one another and parallel to one another and two connecting elements (12, 13) likewise opposite one another that join the respective ends of the legs (10, 11) to one another
and an energy store that is mounted on two articulating points (17, 19) on the parallelogram guide (3, 5) to compensate a load acting on the parallelogram guide (3, 5) so that the device can be moved upwards and downwards over almost its entire range of movement, wherein
at least one (19) of these articulating points (17, 19) is adjustable with respect to the parallelogram guide (3, 5) in such a way that both the pretensioning and the direction of action of force of the energy store (15) are changed, **characterised by**
a controlling element (20) that supports the adjustable articulating point (19) on the parallelogram guide (3, 5); wherein the controlling element (20) has at least one oblong hole (22, 24) through which it is linked to the parallelogram guide (3, 5) and the size and shape of this oblong hole (22, 24) determine the extent of possible displacement of the controlling element (20) with respect to the parallelogram guide (3, 5) and
a setting screw (28) which is in engagement with a spindle nut (30) in such a way that the spindle nut moves along the setting screw when the setting screw is turned, wherein the spindle nut (30) is in engagement with the controlling element (20) in such a way that a movement between the spindle nut (30) and the controlling element (20) is possible at right angles to the setting screw.

2. Body support according to claim 1 in which the at least single articulating point (19) is adjustable in such a way that both the spacing between the articulating points (17, 19) of the energy store (15) and the angle between a longitudinal axis (L) of the energy store and the direction of the load acting on the parallelogram guide (3, 5) are changed.

3. Body support according to any of the preceding claims in which the controlling element (20) links the adjustable articulating point (19) to one of the two connecting elements (12, 13) while a fixed articulating point (17) of the energy store (15) is mounted on a first leg (10, 11) of the parallelogram guide (3, 5).

4. Body support according to any of the preceding claims in which the controlling element (20) is linearly movable for changing the pretensioning and the direction of action of force of the energy store (15).

5. Body support according to any of claims 1 to 3 in which the controlling element (20) is movable along a curve for changing the pretensioning and the direction of action of force of the energy store (15).

6. Body support according to any of the preceding claims in which the controlling element (20) is in engagement with a control curve (35) constructed in a second leg (11) of the parallelogram guide (3, 5) in such a way that the angular position and elastic force of the energy store (15) are dynamically influenced on deflection of the parallelogram guide (3, 5).

7. Body support according to any of the preceding claims in which the controlling element (20) is movable between a maximum position and a minimum position, wherein a longitudinal axis of the energy store (15) in the maximum position of the controlling element (20) forms a smaller angle (α₂, α₄) with the direction of the load acting on the parallelogram guide than in the minimum position (α₃, α₁).

8. Body support according to any of the preceding claims in which the energy store (15) comprises at least one compression spring.

9. Body support according to any of the preceding claims in which the energy store comprises at least one tension spring.

10. Body support according to any of the preceding claims in which there are two parallelogram guides (3, 5) linked to one another by a coupling element (7).

11. Body support according to any of the preceding claims further with an attachment (9) through which it can be pivotably attached to a belt or support strap and a mount (31) for attaching a camera.

## Revendications

1. Support à soutien corporel comprenant un bras élastique (1), sur lequel un appareil est susceptible d'être monté, comprenant :
un guidage à parallélogramme (3, 5), formé de deux branches (10, 11) opposées l'une à l'autre, disposées parallèlement l'une à l'autre, et de deux éléments de liaison (12, 13) opposés également l'un à l'autre, reliant ensemble les extrémités respectives des branches (10, 11),
et un accumulateur d'énergie (15), monté en deux points d'articulation (17, 19), sur le guidage à parallélogramme (3, 5), pour compenser une charge agissant sur le guidage à parallélogramme (3, 5), de manière que, sur à peu près la totalité de sa plage de déplacement, l'appareil puisse être déplacé en levée et en descente avec une force restant constante, où
au moins l'un (19) de ces points d'articulation (17, 19) est réglable par rapport au guidage à parallélogramme (3, 5), de manière que, tant la précontrainte, qu'également la direction d'action de la force de l'accumulateur d'énergie (15) soient modifiées, **caractérisé par**
un élément de réglage (20), servant au montage du point d'articulation (19) réglable sur le guidage à parallélogramme (3, 5) ; l'élément de réglage (20) présentant au moins un trou oblong (22, 24), par l'intermédiaire duquel il est couplé au guidage à parallélogramme (3, 5), et la taille et la forme de ce trou oblong (22, 24) déterminent l'ampleur du déplacement possible de l'élément de réglage (20) par rapport au guidage à parallélogramme (3, 5), et
une vis de réglage (28), en prise avec un écrou de broche (30), de manière que l'écrou de broche en cas d'une rotation de la vis de réglage soit déplacée le long de la vis de réglage, l'écrou à broche (30) étant en prise avec le réglage (20), de manière qu'un déplacement à angle droit par rapport à la vis de réglage soit possible entre l'écrou à broche (30) et l'élément de réglage (20).

2. Support à soutien corporel selon la revendication 1, pour lequel le au moins un point d'articulation (19) est réglable, de manière que, tant l'espacement entre les points d'articulation (17, 19) de l'accumulateur d'énergie (15), qu'également l'angle entre un axe longitudinal (L) de l'accumulateur d'énergie et la direction de la charge agissant sur le guidage à parallélogramme (3, 5), varient.

3. Support à soutien corporel selon l'une des revendications précédentes, pour lequel l'élément de réglage (20) coupe le point d'articulation (19) réglable à l'un des deux éléments de liaison (12, 13), tandis qu'un point d'articulation fixe (17) de l'accumulateur d'énergie (15) est monté sur une première branche (10, 11) du guidage à parallélogramme (3, 5).

4. Support à soutien corporel selon l'une des revendications précédentes, pour lequel l'élément de réglage (20) est déplaçable de façon linéaire, pour modifier la précontrainte et la direction d'action de la force de l'accumulateur d'énergie (15).

5. Support à soutien corporel selon l'une des revendications 1 à 3, pour lequel l'élément de réglage (20) est déplaçable le long d'une courbe, pour modifier la précontrainte et la direction d'action de la force de l'accumulateur d'énergie (15).

6. Support à soutien corporel selon l'une des revendications précédentes, pour lequel l'élément de réglage (20) est en prise avec une came de commande (35) réalisée dans une deuxième branche du guidage à parallélogramme (3, 5), de manière que la position angulaire et la force élastique de l'accumulateur d'énergie (15), en cas de débattement du guidage à parallélogramme (3, 5), soient influencées de façon dynamique.

7. Support à soutien corporel selon l'une des revendications précédentes, pour lequel l'élément de réglage (20) est mobile entre une position maximale et une position minimale, un axe longitudinal de l'accumulateur d'énergie (15), à la position maximale de l'élément de réglage (20), forme un plus petit angle (α₂, α₄) avec la direction de la sollicitation agissant sur le guidage à parallélogramme, qu'à la position minimale (α₃, α₅).

8. Support à soutien corporel selon l'une des revendications précédentes, pour lequel l'accumulateur d'énergie (15) présente au moins un ressort de compression.

9. Support à soutien corporel selon l'une des revendications précédentes, pour lequel l'accumulateur d'énergie présente au moins un ressort de traction.

10. Support à soutien corporel selon l'une des revendications précédentes, pour lequel deux guidages à parallélogramme (3, 5) sont prévus et couplés ensemble par l'intermédiaire d'un élément d'accouplement (7).

11. Support à soutien corporel selon l'une des revendications précédentes, en outre avec un montage (9) par l'intermédiaire duquel il peut être monté à pivotement sur une ceinture ou une sangle support et avec une fixation (31) pour montage d'une caméra.
